# EUROPÄISCHE PATENTANMELDUNG

(11) **EP 3 026 296 A1**
(43) Veröffentlichungstag der Anmeldung: **01.06.2016**
(21) Anmeldenummer: 15191762.2
(22) Anmeldetag: 27.10.2015
(51) Int. Cl.: F16F 15/14, F16H 45/02

(54) **SCHWINGUNGSTILGUNGSEINRICHTUNG**

(30) Priorität: 28.11.2014 DE 102014224430
(71) Anmelder: Schaeffler Technologies AG & Co. KG, 91074 Herzogenaurach (DE)
(72) Erfinder: Maienschein, Stephan, 76534 Baden-Baden (DE); Wahl, Peter, 76744 Wörth-Maximiliansau (DE); Degler, Mario, 76534 Baden-Baden (DE)

(57) **Zusammenfassung**

Schwingungstilgungseinrichtung (10) umfassend einen Tilgermassenträger (12) und wenigstens eine gegenüber diesem begrenzt verlagerbare Tilgermasse (14), wobei der Tilgermassenträger über eine Anbindung (16) mit einem weiteren Bauteil (18) verbunden ist, wobei die Anbindung mit der Tilgermasse wenigstens teilweise radial überlappend angeordnet ist.

## Beschreibung

Die Erfindung betrifft eine Schwingungstilgungseinrichtung mit den Merkmalen gemäß dem Oberbegriff von Anspruch 1.

Derartige Schwingungstilgungseinrichtungen, umfassend einen Tilgermassenträger und wenigstens eine gegenüber diesem begrenzt verlagerbare Tilgermasse sind allgemein bekannt. Dabei ist der Tilgermassenträger über eine Anbindung mit einem weiteren Bauteil verbunden.

Die Aufgabe der Erfindung besteht darin, den Bauraumbedarf einer Schwingungstilgungseinrichtung zu verringern.

Erfindungsgemäß wird diese Aufgabe durch eine Schwingungstilgungseinrichtung mit den Merkmalen gemäß Anspruch 1 gelöst.

Entsprechend wird eine Schwingungstilgungseinrichtung vorgeschlagen, umfassend einen Tilgermassenträger und wenigstens eine gegenüber diesem begrenzt verlagerbare Tilgermasse, wobei der Tilgermassenträger über eine Anbindung mit einem weiteren Bauteil verbunden ist, wobei die Anbindung mit der Tilgermasse wenigstens teilweise radial überlappend angeordnet ist. Dadurch kann insbesondere der radiale Bauraumbedarf der Schwingungstilgungseinrichtung verringert werden.

Die Anbindung kann auch vollständig radial überlappend angeordnet sein.

Die Schwingungstilgungseinrichtung kann bevorzugt als Fliehkraftpendeleinrichtung ausgebildet sein, wobei die Tilgermasse als Pendelmasse und der Tilgermassenträger als Pendelmassenträger ausgebildet ist. Die Pendelmasse ist dabei entlang einer Pendellaufbahn gegenüber dem Pendelmassenträger begrenzt verschwenkbar.

Die Schwingungstilgungseinrichtung kann bevorzugt als Festfrequenztilger ausgebildet sein, bei dem die Tilgermasse über wenigstens ein elastisches Element gegenüber dem Tilgermassenträger begrenzt verlagerbar ist.

Die Anbindung kann als reib-, form- und/oder stoffschlüssige Verbindung ausgeführt sein.

Das weitere Bauteil kann als Dämpfereingangsteil, Dämpferausgangsteil, Dämpferzwischenteil und/oder Kupplungseingangsteil oder Kupplungsausgangsteil ausgebildet sein.

Eine besonders bevorzugte Ausführung der Erfindung zeichnet sich dadurch aus, dass die Anbindung eine drehfeste Verbindung bewirkt.

Eine besonders spezielle Ausführungsform der Erfindung zeichnet sich dadurch aus, dass die Anbindung eine axial und radial feste Verbindung bewirkt.

Eine weitere, spezielle Ausgestaltung der Erfindung zeichnet sich dadurch aus, dass der Tilgermassenträger aus einem ersten und axial dazu beabstandet angeordneten zweiten Tilgermassenträgerelement besteht, wobei die Tilgermasse axial zwischen dem ersten und zweiten Tilgermassenträgerelement begrenzt verlagerbar gegenüber diesen angeordnet ist.

Eine vorteilhafte Ausführungsform der Erfindung zeichnet sich dadurch aus, dass die Tilgermasse als erste Tilgermasse wirkt und eine weitere zweite Tilgermasse axial beabstandet zu der ersten Tilgermasse angeordnet ist, wobei der Tilgermassenträger axial zwischen der ersten und zweiten Tilgermasse angeordnet ist.

Eine bevorzugte spezielle Ausgestaltung der Erfindung zeichnet sich dadurch aus, dass die Anbindung umfangsseitig versetzt zu der Tilgermasse angeordnet ist.

Eine weitere, spezielle Ausgestaltung der Erfindung zeichnet sich dadurch aus, dass die Anbindung ein Befestigungselement umfasst, das in dem Tilgermassenträger versenkt eingebracht ist. Dadurch besteht die Möglichkeit die Tilgermasse breiter und somit funktional wirksamer auszuführen.

Eine bevorzugte spezielle Ausgestaltung der Erfindung zeichnet sich dadurch aus, dass die Anbindung ein Befestigungselement umfasst, das als Nietelement ausgebildet ist.

Eine besonders bevorzugte Ausführung der Erfindung zeichnet sich dadurch aus, dass die Anbindung mit einem von der Tilgermasse bei ihrer Bewegung überstrichenen Bereich radial überlappend angeordnet ist.

Eine besonders spezielle Ausführungsform der Erfindung zeichnet sich dadurch aus, dass das weitere Bauteil einem Drehschwingungsdämpfer zugehörig ist.

Weitere Vorteile und vorteilhafte Ausgestaltungen der Erfindung ergeben sich aus der Beschreibung und den Abbildungen.

### Figurenbeschreibung

Die Erfindung wird im Folgenden unter Bezugnahme auf die Abbildungen ausführlich beschrieben. Es zeigen im Einzelnen:
- Figur 1:: Einen Halbschnitt eines Querschnitts durch eine Schwingungstilgungseinrichtung in einer speziellen Ausführungsform der Erfindung.
- Figur 2:: Einen Ausschnitt eines Querschnitts durch eine Schwingungstilgungseinrichtung in einer weiteren speziellen Ausführungsform der Erfindung.
- Figur 3:: Einen Ausschnitt eines Querschnitts durch eine Schwingungstilgungseinrichtung in einer weiteren speziellen Ausführungsform der Erfindung.
- Figur 4:: Einen Ausschnitt eines Querschnitts durch eine Schwingungstilgungseinrichtung in einer weiteren speziellen Ausführungsform der Erfindung.
- Figur 5:: Einen Ausschnitt eines Querschnitts durch eine Schwingungstilgungseinrichtung in einer weiteren speziellen Ausführungsform der Erfindung.
- Figur 6:: Einen Ausschnitt eines Querschnitts durch eine Schwingungstilgungseinrichtung in einer weiteren speziellen Ausführungsform der Erfindung.

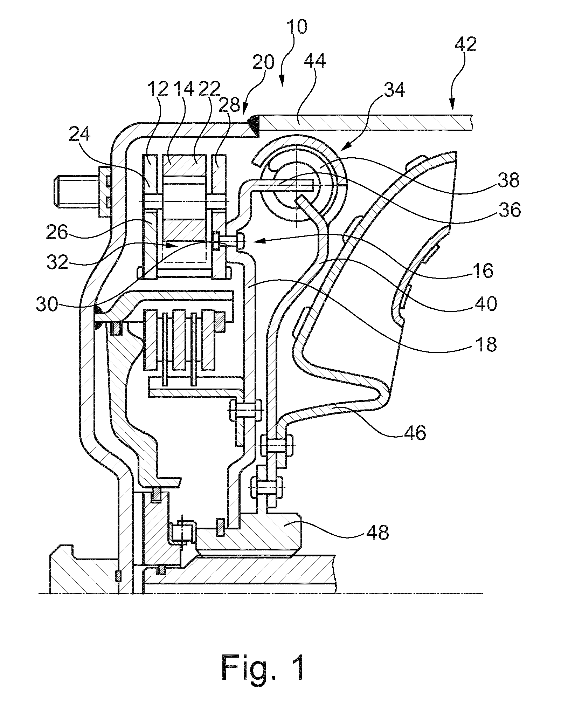

Figur 1 zeigt einen Halbschnitt eines Querschnitts durch eine Schwingungstilgungseinrichtung 10 in einer speziellen Ausführungsform der Erfindung. Die Schwingungstilgungseinrichtung 10 umfasst einen Tilgermassenträger 12 und wenigstens eine gegenüber diesem begrenzt verlagerbare Tilgermasse 14, wobei der Tilgermassenträger 12 über eine Anbindung 16 mit einem weiteren Bauteil 18 verbunden ist. Die Schwingungstilgungseinrichtung 10 ist bevorzugt als Fliehkraftpendeleinrichtung 20 ausgebildet, wobei die Tilgermasse 14 als Pendelmasse 22 und der Tilgermassenträger 12 als Pendelmassenträger 24 ausgebildet ist. Die Pendelmasse 22 ist dabei entlang einer Pendellaufbahn gegenüber dem Pendelmassenträger 24 begrenzt verschwenkbar.

Die Anbindung 16 ist mit der Tilgermasse 14 wenigstens teilweise radial überlappend angeordnet. Die Anbindung 16 bewirkt eine drehfeste, axial und radial feste Verbindung.

Der Tilgermassenträger 12 besteht aus einem ersten 26 und axial dazu beabstandet angeordneten zweiten Tilgermassenträgerelement 28 besteht, wobei die Tilgermasse 14 axial zwischen dem ersten und zweiten Tilgermassenträgerelement 26, 28 begrenzt verlagerbar gegenüber diesen angeordnet ist.

Die Anbindung 16 umfasst ein Befestigungselement 30, das in dem Tilgermassenträger 12 versenkt eingebracht ist. Das Befestigungselement 30 ist als Nietelement ausgebildet.

Die Anbindung 16 ist mit einem von der Tilgermasse 14 bei ihrer Bewegung überstrichenen Bereich 32 wenigstens teilweise radial überlappend angeordnet, vorzugsweise vollständig radial überlappend angeordnet.

Das weitere Bauteil 18 ist einem Drehschwingungsdämpfer 34 zugehörig und als Dämpfereingangsteil 36 wirksam. Das Dämpfereingangsteil 36 ist über die Wirkung von Federelementen 38 gegenüber einem Dämpferausgangsteil 40 begrenzt verdrehbar.

Die Schwingungstilgungseinrichtung 10 ist in einem Drehmomentwandler 42 eingebaut und in einem Drehmomentwandlergehäuse 44 eingebracht.

Das Dämpferausgangsteil 40 ist mit einem Turbinenrad 46 drehfest verbunden. Insbesondere ist das Dämpferausgangsteil 40 mit einer mit einer Getriebeeingangswelle verbindbaren Ausgangsnabe 48 drehfest verbunden.

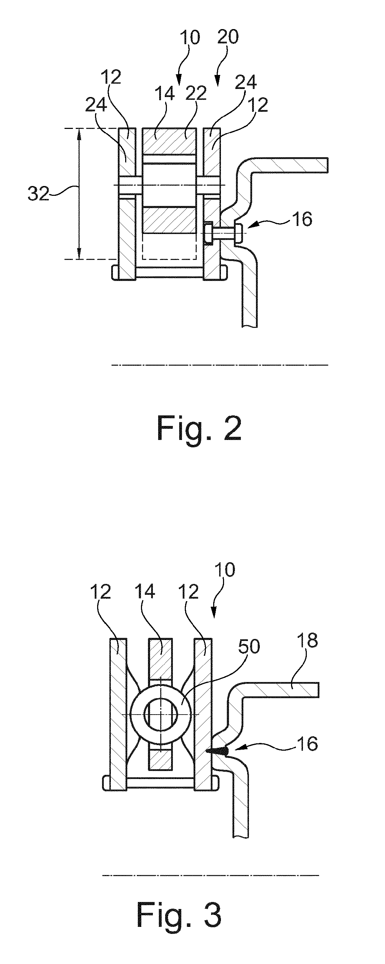

In Figur 2 ist ein Ausschnitt eines Querschnitts durch eine Schwingungstilgungseinrichtung 10 in einer weiteren speziellen Ausführungsform der Erfindung dargestellt. Wie in den nachfolgenden Figuren 3 bis 6 auch, ist die Schwingungstilgungseinrichtung 10 bevorzugt als Fliehkraftpendeleinrichtung 20 ausgebildet, wobei die Tilgermasse 14 als Pendelmasse 22 und der Tilgermassenträger 12 als Pendelmassenträger 24 ausgebildet ist. Der von der Pendelmasse 22 bei ihrer Bewegung entlang einer Pendellaufbahn überstrichene Bereich 32 ist hierbei gekennzeichnet. Dabei ist die Anbindung 16 vollständig radial überlappend mit diesem Bereich 32 angeordnet.

Figur 3 zeigt einen Ausschnitt eines Querschnitts durch eine Schwingungstilgungseinrichtung 10 in einer weiteren speziellen Ausführungsform der Erfindung. Dabei ist die Tilgermasse 14 über die Wirkung von einem elastischen Element 50, hier einer Spiralfeder gegenüber dem Tilgermassenträger 12 begrenzt verlagerbar. Der Tilgermassenträger 12 ist mit dem weiteren Bauteil 18 verschweißt, womit die Anbindung 16 als Verschweißung ausgeführt ist. Die Anbindung 16 ist dabei mit der Tilgermasse 14 radial überlappend angeordnet.

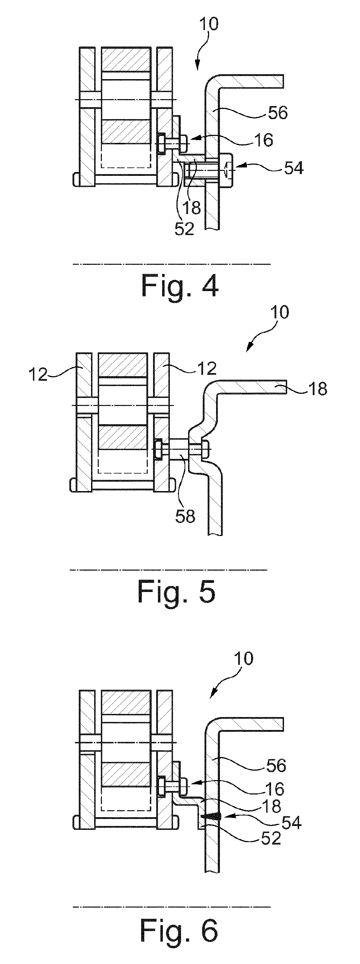

In Figur 4 ist ein Ausschnitt eines Querschnitts durch eine Schwingungstilgungseinrichtung 10 in einer weiteren speziellen Ausführungsform der Erfindung dargestellt. Dabei ist das weitere Bauteil 18 als Verbindungselement 52 ausgeführt, das wiederum eine Anbindung 54 mit einem noch weiteren Bauteil 56 ermöglicht. Das Verbindungselement 52 ermöglicht dabei insbesondere auch einen Radial- und Axialversatz beider Anbindungen 16, 54. Die Anbindung 16 des Zwischenelements 52 an das weitere Bauteil 56 erfolgt hier bevorzugt über eine Schraubverbindung.

Figur 5 zeigt einen Ausschnitt eines Querschnitts durch eine Schwingungstilgungseinrichtung 10 in einer weiteren speziellen Ausführungsform der Erfindung. Dabei ist der Tilgermassenträger 12 mit dem weiteren Bauteil 18 über einen Abstandsbolzen 58 verbunden, womit ein Axialversatz beider Bauteile 12, 18 ermöglicht wird.

In Figur 6 ist ein Ausschnitt eines Querschnitts durch eine Schwingungstilgungseinrichtung 10 in einer weiteren speziellen Ausführungsform der Erfindung dargestellt. Dabei ist das weitere Bauteil 18 als Verbindungselement 52 ausgeführt, das wiederum eine Anbindung 54 mit einem noch weiteren Bauteil 56 ermöglicht. Das Verbindungselement 52 ermöglicht dabei insbesondere auch einen Radial- und Axialversatz beider Anbindungen 16, 54. Die Anbindung 16 des Zwischenelements 52 an das weitere Bauteil 56 erfolgt hier bevorzugt über eine Schweißverbindung.

### Bezugszeichen

- 10: Schwingungstilgungseinrichtung
- 12: Tilgermassenträger
- 14: Tilgermasse
- 16: Anbindung
- 18: Bauteil
- 20: Fliehkraftpendeleinrichtung
- 22: Pendelmasse
- 24: Pendelmassenträger
- 26: erstes Tilgermassenträgerelement
- 28: zweites Tilgermassenträgerelement
- 30: Befestigungselement
- 32: überstrichener Bereich
- 34: Drehschwingungsdämpfer
- 36: Dämpfereingangsteil
- 38: Federelemente
- 40: Dämpferausgangsteil
- 42: Drehmomentwandler
- 44: Drehmomentwandlergehäuse
- 46: Turbinenrad
- 48: Ausgangsnabe
- 50: elastisches Element
- 52: Verbindungselement
- 54: Anbindung
- 56: Bauteil
- 58: Abstandsbolzen

## Patentansprüche

1. Schwingungstilgungseinrichtung (10) umfassend einen Tilgermassenträger (12) und wenigstens eine gegenüber diesem begrenzt verlagerbare Tilgermasse (14), wobei der Tilgermassenträger (12) über eine Anbindung (16) mit einem weiteren Bauteil (18) verbunden ist, **dadurch gekennzeichnet, dass** die Anbindung (16) mit der Tilgermasse (14) wenigstens teilweise radial überlappend angeordnet ist.

2. Schwingungstilgungseinrichtung (10) nach Anspruch 1, wobei die Anbindung (16) eine drehfeste Verbindung bewirkt.

3. Schwingungstilgungseinrichtung (10) nach Anspruch 1 oder 2, wobei die Anbindung (16) eine axial und radial feste Verbindung bewirkt.

4. Schwingungstilgungseinrichtung (10) nach einem der vorangehenden Ansprüche , wobei der Tilgermassenträger (12) aus einem ersten und axial dazu beabstandet angeordneten zweiten Tilgermassenträgerelement besteht, wobei die Tilgermasse (14) axial zwischen dem ersten und zweiten Tilgermassenträgerelement begrenzt verlagerbar gegenüber diesen angeordnet ist.

5. Schwingungstilgungseinrichtung (10) nach einem der Ansprüche 1 bis 3, wobei die Tilgermasse (14) als erste Tilgermasse wirkt und eine weitere zweite Tilgermasse axial beabstandet zu der ersten Tilgermasse angeordnet ist, wobei der Tilgermassenträger (12) axial zwischen der ersten und zweiten Tilgermasse angeordnet ist.

6. Schwingungstilgungseinrichtung (10) nach Anspruch 5, wobei die Anbindung (16) umfangsseitig versetzt zu der Tilgermasse (14) angeordnet ist.

7. Schwingungstilgungseinrichtung (10) nach einem der vorangehenden Ansprüche, wobei die Anbindung (16) ein Befestigungselement (30) umfasst, das in dem Tilgermassenträger (12) versenkt eingebracht ist.

8. Schwingungstilgungseinrichtung (10) nach einem der vorangehenden Ansprüche, wobei die Anbindung (16) ein Befestigungselement (30) umfasst, das als Nietelement ausgebildet ist.

9. Schwingungstilgungseinrichtung (10) nach einem der vorangehenden Ansprüche, wobei die Anbindung (16) mit einem von der Tilgermasse (14) bei ihrer Bewegung überstrichenen Bereich (32) wenigstens teilweise radial überlappend angeordnet ist, vorzugsweise vollständig radial überlappend angeordnet ist.

10. Schwingungstilgungseinrichtung (10) nach einem der vorangehenden Ansprüche, wobei das weitere Bauteil einem Drehschwingungsdämpfer (34) zugehörig ist.
